# FASCICULE DE BREVET EUROPEEN

(11) **EP 1 650 625 B1**
(45) Date de publication et mention de la délivrance du brevet: **27.06.2007**
(21) Numéro de dépôt: 05022576.2
(22) Date de dépôt: 17.10.2005
(51) Int. Cl.: G05B 19/42, E06B 9/82

(54) **Procédé de fonctionnement d'un écran motorisé et écran motorisé pour sa mise en oeuvre**
Motorgetriebener Schirm und Verfahren zur seiner Betätigung
Motor driven screen and method for its operation

(30) Priorité: 25.10.2004 FR 0411349
(43) Date de publication de la demande: 26.04.2006
(73) Titulaire: Somfy SAS, 74307 Cluses (FR)
(72) Inventeur: Canon, Sylvain, 38000 Grenoble (FR)
(74) Mandataire: Bugnion Genève

(56) Documents cités:
- EP-A- 1 319 795

## Description

L'invention concerne un procédé de fonctionnement d'un dispositif d'écran motorisé selon le préambule de la revendication 1. L'invention concerne également un dispositif d'écran motorisé pour la mise en oeuvre d'un tel procédé.

Les dispositifs d'écrans connus comprennent un élément enroulable fixé d'une part à un tube d'enroulement autour duquel celui-ci vient s'enrouler et d'autre part à une barre rigide dite barre de charge, la barre de charge étant généralement guidée par ses extrémités dans des rails situés de part et d'autre d'une ouverture à masquer. Les dispositifs d'écran comprennent également un moyen de verrouillage permettant de maintenir la barre de charge dans une position déterminée afin d'éviter que celle-ci soit soulevée ou claque sous les actions du vent et pour éviter que l'élément enroulable claque au vent.

En général, lors du déroulement de l'élément enroulable, la barre de charge entre dans le moyen de verrouillage et suite à un mouvement inverse, c'est-à-dire à un mouvement d'enroulement, se bloque dans le moyen de verrouillage. Pour déverrouiller et ouvrir de nouveau l'écran, il faut d'abord déplacer l'écran dans le sens du déroulement jusqu'à une certaine position avant de pouvoir enrouler l'écran.

Ces différents déplacements peuvent être effectués manuellement c'est-à-dire par action d'efforts développés par l'utilisateur et appliqués sur l'élément enroulable ou être effectués de manière motorisée c'est-à-dire par action d'efforts développés par un actionneur et appliqués sur l'élément enroulable.

Dans ce dernier cas, l'actionneur est généralement placé dans le tube d'enroulement et répond à des ordres émanant d'un utilisateur par l'intermédiaire d'une interface de commande. L'actionneur comprend des moyens électriques ou électroniques de gestion du mouvement de l'écran en fonction des ordres reçus et en fonction d'événements détectés. Ces moyens électriques ou électroniques peuvent, pour ce faire, fonctionner conjointement avec des capteurs de position, de couple ou de temps de parcours. L'ensemble de ces moyens constitue une unité de commande.

De tels dispositifs sont décrits par exemple dans les documents suivants: FR 2 573 551, EP 1 319 795 et JP 2001-173347.

On connaît de la demande FR 2 573 551, un dispositif de store motorisé comprenant un moyen de verrouillage et une barre de charge dont les extrémités coulissent dans des glissières. Une première position et une deuxième position de la barre de charge sont repérées et le passage de la barre de charge dans ces positions provoque le basculement d'interrupteurs.

La première position correspond à une position haute d'inversion de sens, c'est-à-dire à une position dans laquelle, en entrée dans le moyen de verrouillage, une inversion du sens de déplacement provoque un blocage du store, et plus particulièrement un blocage de la rotation des lames du store.

La deuxième position correspond à une position basse de butée dans le moyen de verrouillage. Ces positions sont définies par un dispositif de comptage mécanique à réglage manuel et sont gérées comme des positions de fin de course.

Le document JP 2001-173347 décrit un dispositif de store motorisé comprenant des moyens de verrouillage. Le passage de la barre de charge du dispositif à hauteur de ces moyens de verrouillage provoque le basculement des moyens de verrouillage. Le mouvement du store est poursuivi jusqu'à une position basse, puis inversé. Les moyens de verrouillage basculés bloquent alors le mouvement d'ouverture. La position de verrouillage peut être repérée par des capteurs, la position d'inversion de mouvement par une détection de couple.

On connaît de la demande de brevet EP 1 319 795 un procédé d'apprentissage des positions d'un dispositif de verrouillage permettant de gérer automatiquement les manoeuvres d'un élément enroulable comprenant une barre de charge en fonction des ordres reçus de l'utilisateur. Le procédé d'apprentissage définit plusieurs positions importantes. Une première position correspond à la fin de course haute de l'élément enroulable, une deuxième position correspond à la position dite de verrouillage, une troisième position correspond à la position dans laquelle le mouvement de l'écran doit être inversé de manière à activer le moyen de verrouillage et une quatrième position correspond à la position dite de déverrouillage en dessous de laquelle il faut se déplacer pour déverrouiller l'élément enroulable.

Lors d'un mouvement de descente, la barre de charge de l'élément enroulable part de la première position pour descendre vers la troisième position située dans le moyen de verrouillage. Dans cette troisième position, le mouvement de l'élément enroulable est arrêté puis inversé jusqu'à atteindre la deuxième position. Dans cette position, la barre de charge est bloquée dans le moyen de verrouillage et le mouvement de montée ne peut pas être poursuivi. A ce moment, l'élément enroulable est tendu et ne peut être soulevé ni gonflé par le vent.

Pour déverrouiller l'élément enroulable, il est alors nécessaire de dérouler l'élément jusqu'à ce qu'il occupe la quatrième position avant de pouvoir inverser le déplacement, c'est-à-dire enrouler l'élément.

Par rapport à l'art antérieur cité dans ce document, le procédé d'apprentissage permet de déterminer les positions sans devoir définir les parcours entre la première position et la quatrième position, via les deuxième et troisième positions.

Ainsi, pour configurer le dispositif, l'installateur doit déplacer l'élément jusqu'à ce que la barre de charge soit entrée dans le moyen de verrouillage dans une position comprise entre la deuxième et quatrième position. Là, l'installateur doit commander une inversion du sens du déplacement la barre de charge pour la diriger en direction de la deuxième position et déterminer, par une détection de surcouple, cette position avant de l'enregistrer de manière automatique. Les troisième et quatrième positions sont déterminées ultérieurement. La description reste cependant très vague sur la manière de déterminer ces positions.

Les moyens de verrouillage utilisés actuellement sont de faible taille ainsi les distances séparant les deuxième, troisième et quatrième positions sont réduites. Cette caractéristique pose problème pour la mise en oeuvre du procédé décrit précédemment. En effet, du fait de ces faibles distances, il est très difficile pour l'installateur, lors de l'installation du dispositif, d'amener directement l'élément enroulable dans une position comprise entre la deuxième et la quatrième position. Par conséquent, l'installateur doit très souvent réitérer un déplacement de l'élément enroulable dans le sens de la descente jusque dans les limites du verrou pour réussir à arrêter l'écran dans une position souhaitée. En effet, si la quatrième position est dépassée, il est nécessaire de revenir à une position de départ située entre la première et la deuxième position pour pouvoir configurer le dispositif.

Par ailleurs, de plus en plus de moyens de verrouillage de type « ouverts » sont utilisés. Ce type de moyen de verrouillage permet de laisser librement passer la barre de charge au travers de celui-ci lorsqu'aucune inversion de sens de déplacement n'est commandée. Par conséquent, ces moyens de verrouillage peuvent être installés n'importe où le long des guidages de la barre de charge et permettent de définir des positions intermédiaires de verrouillage. Ainsi, l'élément enroulable peut par exemple être verrouillé à mi-course pour recouvrir uniquement la partie supérieure de l'ouverture qu'il équipe.

Le but de l'invention est de fournir un procédé de fonctionnement d'un dispositif d'écran motorisé permettant de pallier les inconvénients cités et permettant d'améliorer les procédés de fonctionnement connus de l'art antérieur. En particulier, l'invention propose un procédé de fonctionnement permettant de faciliter les opérations de configuration et de réglage du dispositif d'écran motorisé et de réduire leur temps de réalisation. L'invention propose notamment de faciliter les opérations de définition des positions des moyens de verrouillage du dispositif.

Le procédé de fonctionnement selon l'invention est caractérisé par la partie caractérisante de la revendication 1.

Différents modes d'exécution du procédé sont définis par les revendications dépendantes 2 à 8.

Le dispositif d'écran motorisé selon l'invention est défini par la revendication 9.

Le dispositif d'écran motorisé peut comprendre un capteur de couple d'entraînement de l'écran.

Le dessin annexé représente un mode de réalisation d'un dispositif d'écran motorisé selon l'invention et différents modes d'exécution du procédé de fonctionnement selon l'invention.

La figure 1 est une vue schématique d'un dispositif d'écran motorisé permettant de mettre en oeuvre le procédé de fonctionnement selon l'invention.

La figure 2 est une vue schématique de détail d'un dispositif d'écran motorisé au niveau d'un de ses moyens de verrouillage.

La figure 3 est un schéma illustrant une procédure d'un premier mode d'exécution du procédé de fonctionnement selon l'invention.

La figure 4 est un schéma illustrant une procédure d'un deuxième mode d'exécution du procédé de fonctionnement selon l'invention.

La figure 5 est un schéma illustrant une procédure d'un troisième mode d'exécution du procédé de fonctionnement selon l'invention.

La figure 6 est un schéma illustrant les correspondances entre des positions angulaires d'un tube d'enroulement et des positions de l'extrémité libre d'un écran.

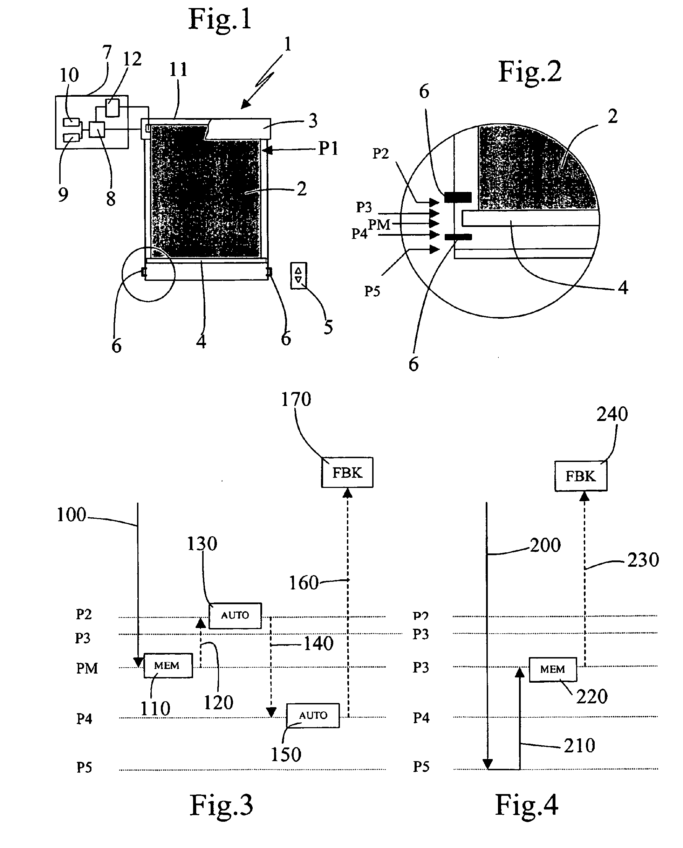

Un dispositif d'écran motorisé 1 est représenté à la figure 1. Ce dispositif comprend un élément enroulable 2 lié à une de ses extrémités à un tube d'enroulement 3 et à l'autre de ses extrémités, appelée extrémité libre, à une barre de charge 4 dont les extrémités sont guidées par des rails de guidage disposés dans un bâtiment de part et d'autre d'une ouverture que l'élément enroulable est destiné à recouvrir.

Les déplacements de l'élément enroulable 2 ou écran sont commandés par les déplacements de rotation du tube d'enroulement 3. Un motoréducteur tubulaire disposé à l'intérieur du tube d'enroulement 3 permet l'entraînement de celui-ci. Les mouvements du motoréducteur sont commandés par une unité de commande 7 liée au motoréducteur, à des capteurs 10, 12 et à une interface utilisateur 5 par le biais de laquelle un utilisateur peut commander les mouvements de l'élément enroulable. Le dispositif comprend un capteur 12 de position angulaire du tube d'enroulement 3 et peut également comprendre un capteur de couple 10 exercé par le motoréducteur pour détecter des obstacles et/ou les fins de course et un capteur de position de la barre de charge 4. L'interface utilisateur 5 peut être reliée à l'unité de commande 7 par des moyens de communication filaire ou non filaire (par exemple par ondes radioélectriques ou par rayons infrarouges). L'interface de commande 7 comprend notamment une unité logique de traitement 8 et une mémoire 9.

L'élément enroulable peut notamment consister en un élément de fermeture, d'occultation ou de protection solaire. Il peut notamment consister en une toile. Le tube d'enroulement est de préférence monté au-dessus de l'ouverture que l'élément enroulable est destiné à recouvrir. L'élément enroulable vient de préférence s'enrouler dans un caisson 11 destiné à le protéger.

Pour simplifier la description, on considère que l'écran se déroule vers le bas, notamment sous l'effet de son propre poids. D'autres configurations sont évidemment possibles.

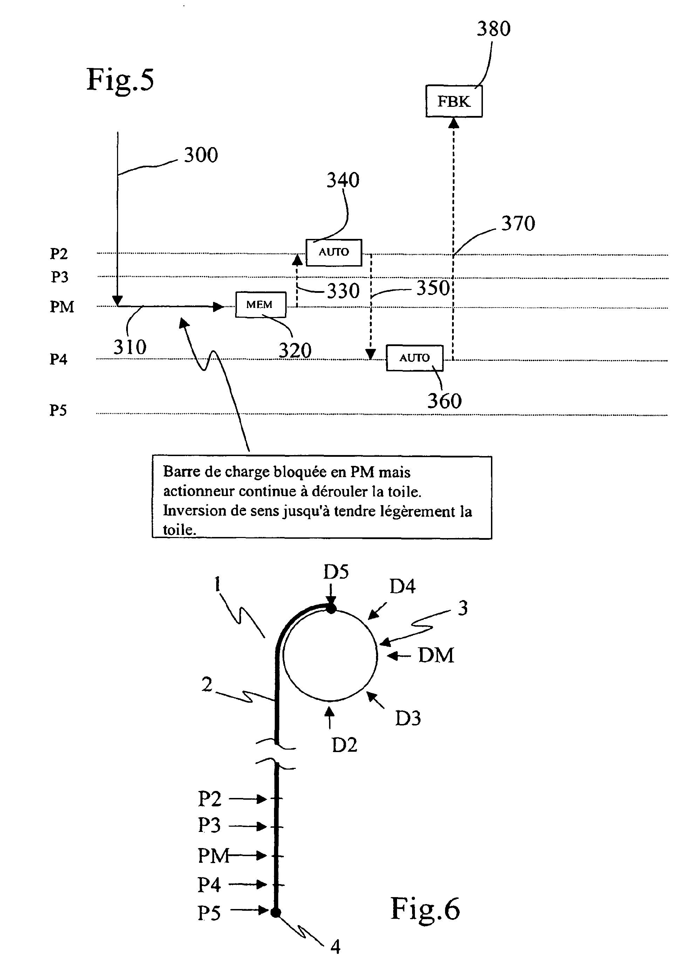

Une première position P1 de la barre de charge ou de l'extrémité libre de l'élément correspond à une position d'ouverture complète de l'élément enroulable. A cette position correspond une position angulaire D1 du tube d'enroulement 3, comme représenté à la figure 6.

Le long des rails de guidage disposés de part et d'autre de l'ouverture, le dispositif comprend des moyens de verrouillage 6. Les moyens de verrouillage coopèrent avec les extrémités de la barre de charge. Ces moyens de verrouillage déterminent, comme représenté à la figure 2, une deuxième position P2 de la barre de charge, une troisième position P3 de la barre de charge et une quatrième position P4 de la barre de charge. La deuxième position P2 est une position dite verrouillée dans laquelle l'élément enroulable est bloqué, elle correspond à une position angulaire verrouillée D2 du tube d'enroulement 3. La troisième position P3 est une position dite d'inversion. Lorsque la barre de charge dépasse cette position P3 dans le sens du déroulement de l'élément et qu'ensuite un mouvement d'enroulement de l'élément est commandé, l'écran se retrouve bloqué, la barre de charge étant en position P2 et le tube d'enroulement en position D2. Cette position P3 correspond à une position angulaire d'inversion D3 du tube d'enroulement 3. La quatrième position P4 est une position dite de sortie en dessous de laquelle la barre de charge ayant été verrouillée doit venir afin que l'élément enroulable puisse de nouveau être enroulé jusqu'à atteindre sa position d'ouverture totale P1. Cette position correspond à une position angulaire de sortie D4 du tube d'enroulement 3.

La position P4 est une position inférieure à la position P3, cette position P3 étant inférieure à la position P2.

Lors de la configuration de verrouillage du dispositif, une position PM de la barre de charge doit être définie ainsi que la position correspondante DM du tube d'enroulement 3. Ces positions PM et DM doivent être choisies et enregistrées par l'installateur. La position PM est dite position d'inversion enregistrée et la position PM est dite position d'inversion de rotation enregistrée DM.

La valeur dM de la position DM est utilisée dans le mode d'utilisation de l'écran motorisé. En effet, lorsque l'utilisateur envoie au dispositif d'écran (en position fermée) un ordre de fermeture et de verrouillage de la barre de charge en position P2, le dispositif d'écran exécute tout d'abord une action de rotation du tube d'enroulement 3 dans le sens du déroulement de l'écran, puis, lorsque le capteur de position 12 détecte que le tube d'enroulement a atteint la position DM (signifiant que la barre de charge se trouve en position PM), exécute une action d'arrêt du mouvement de rotation du tube d'enroulement. Le dispositif d'écran exécute alors immédiatement une action de rotation du tube d'enroulement dans le sens de l'enroulement jusqu'à ce que le capteur de position détecte que le tube a atteint la position D2 (signifiant que la barre de charge se trouve bloquée en position P2).

La barre de charge peut en outre traverser les moyens de verrouillage dans le sens de la descente comme dans le sens de la montée sans être verrouillée s'il ne se produit pas d'inversion de son sens de déplacement entre les positions P3 et P4.

La position PM doit se situer à l'intérieur du moyen de verrouillage dans une zone dans laquelle une inversion de sens de déplacement de la barre de charge d'un déplacement de descente à un déplacement de montée, provoque le verrouillage de la barre de charge, c'est-à-dire n'importe où entre les positions P3 et P4. Hors de cette zone, l'inversion de sens de déplacement de la barre de charge ne produit pas d'effet particulier.

Différents types de moyens de verrouillage fonctionnant selon ce principe peuvent être utilisés. On peut en particulier utiliser des moyens de verrouillage tels que ceux décrits, en référence à la figure 3, dans le passage de la ligne 41 colonne 2 à la ligne 42 colonne 3 de la demande de brevet EP 1 270 865 A2. On peut également utiliser des moyens de verrouillage tels que ceux décrits dans la demande de brevet EP 1 223 262 A1. Les contenus de ces deux demandes sont incorporés par référence dans la présente demande.

Une première procédure de configuration du dispositif d'écran motorisé est représentée à la figure 3 et définit un premier mode d'exécution du procédé de fonctionnement selon l'invention.

Dans une première étape 100, l'installateur commande par l'intermédiaire de l'interface utilisateur un mouvement de descente de la barre de charge, c'est-à-dire un mouvement de déroulement de l'élément enroulable ou un mouvement de montée de la barre de charge, c'est-à-dire un mouvement d'enroulement de l'élément enroulable jusqu'à amener la barre de charge dans les moyens de verrouillage et plus précisément dans la zone dans laquelle une inversion du sens de déplacement de la barre de charge, d'un mouvement de descente à un mouvement de montée provoque un blocage de cette dernière. Cette zone peut être matérialisée par des marquages sur les rails de guidage ou sur les moyens de verrouillage, la barre de charge venant en regard avec ces marquages lorsqu'elle se trouve dans ladite zone. Compte tenu du caractère restreint de cette zone lié à la nature des moyens de verrouillage, l'installateur peut être obligé d'atteindre cette zone par tâtonnement, sans toutefois être obligé de ressortir du verrou. Ce tâtonnement correspond alors à de fins ajustements, par de petits mouvements de descente et de montée de la barre de charge.

Une fois que la barre de charge se trouve dans la zone recherchée, dans une étape 110, l'installateur enregistre manuellement la valeur dM de position angulaire DM du tube d'enroulement correspondant à la position PM occupée par la barre de charge. Cette valeur dM est enregistrée dans une mémoire de l'unité de commande du dispositif d'écran motorisé. L'enregistrement est commandé par exemple par une manoeuvre particulière de l'interface utilisateur ou par appui sur une touche particulière de l'interface utilisateur.

Dans une étape 120, déclenchée automatiquement suite à l'enregistrement de la valeur dM, une alimentation du motoréducteur est commandée provoquant l'enroulement de l'élément enroulable et par conséquent la montée de la barre de charge. Cette étape pourrait également faire suite à une action de l'installateur.

Dans une étape 130, la barre de charge atteint la position P2 dans laquelle elle est bloquée par les moyens de verrouillage. Cette position est détectée par le capteur de couple et l'alimentation du motoréducteur est coupée. La valeur d2 de position angulaire D2 du tube d'enroulement correspondant à la position P2 de la barre de charge est automatiquement enregistrée en mémoire dans l'unité de commande du dispositif d'écran motorisé. La valeur d2 enregistrée peut correspondre à une position légèrement inférieure à la position de blocage de la barre de charge de manière à ce qu'une fois dans le mode d'utilisation, lorsqu'un utilisateur commande la fermeture de l'écran la barre de charge ne vienne pas dans sa position de blocage en exerçant des contraintes importantes sur les moyens de verrouillage.

Dans une étape 140, déclenchée automatiquement suite à l'enregistrement de la valeur d2, une alimentation du motoréducteur est commandée provoquant le déroulement de l'élément enroulable et par conséquent la descente de la barre de charge. Cette étape pourrait également faire suite à une action de l'installateur.

Dans une étape 150, la barre de charge atteint la position de déverrouillage P4. Cette position dite déverrouillée peut être détectée par une détection de variation du couple, la valeur d4 de position angulaire D4 du tube d'enroulement correspondant à la position P4 est automatiquement enregistrée dans une mémoire de l'unité de commande du dispositif d'écran motorisé. Lorsque cette position est détectée, un arrêt du motoréducteur, par coupure de l'alimentation, est commandé. La position P4 peut également être déterminée par la connaissance de la position P2 et par la connaissance du type de moyen de verrouillage utilisé. Le type de moyen de verrouillage utilisé peut être stocké en mémoire lors de l'installation ou lors de la fabrication du dispositif d'écran. Dans le cas où cette position peut être déterminée avec ces données, la valeur d4 est enregistrée en mémoire avec la valeur d2 à l'étape 130 et, lors de l'étape 150, seule une coupure de l'alimentation du motoréducteur est commandée.

Dans une étape 160, déclenchée automatiquement suite à l'étape 150, une alimentation du motoréducteur est commandée provoquant une inversion de sens par rapport au dernier sens de déplacement et donc l'enroulement de l'élément enroulable. Par conséquent, la barre de charge remonte jusqu'à une position supérieure à la position P2.

Dans une étape 170, déclenchée automatiquement suite à l'étape 160, deux alimentations du motoréducteur de courte durée et dans des sens différents sont commandées, provoquant un léger aller-retour de la barre de charge. Ces mouvements permettent de confirmer les enregistrements effectués.

Le dispositif peut alors basculer dans le mode d'utilisation.

L'inconvénient de cette procédure est que le signal de confirmation intervient relativement longtemps après l'enregistrement par l'installateur de la valeur dM correspondant à la position PM.

Une deuxième procédure de configuration du dispositif d'écran motorisé est représentée à la figure 4 et définit un deuxième mode d'exécution du procédé de fonctionnement selon l'invention.

Cette procédure de configuration permet de simplifier l'installation tout en assurant l'installateur qu'il a bien réalisé les manipulations nécessaires.

Dans une première étape 200, l'installateur commande par l'intermédiaire de l'interface utilisateur un mouvement de descente de la barre de charge, jusqu'à une position P5 se situant en dessous de la position déverrouillée P4.

Dans une deuxième étape 210, l'installateur commande par l'intermédiaire de l'interface utilisateur un mouvement de montée de la barre de charge, jusqu'à amener celle-ci dans les moyens de verrouillage et plus précisément dans la zone dans laquelle une inversion du déplacement de la barre de charge, d'un mouvement de descente à un mouvement de montée provoque un blocage de cette dernière. Compte tenu du caractère restreint de cette zone lié à la nature des moyens de verrouillage, l'installateur peut être obligé d'atteindre cette zone par tâtonnement. Ce tâtonnement correspond alors à de fins ajustements de position, par de petits mouvements de montée et de descente de la barre de charge.

Une fois que la barre de charge est stoppée dans la zone recherchée, dans une étape 220, l'installateur enregistre manuellement la valeur dM de position angulaire DM du tube d'enroulement correspondant à la position PM occupée par la barre de charge. Cette valeur dM est enregistrée dans une mémoire de l'unité de commande du dispositif d'écran motorisé. L'enregistrement peut être commandé par exemple par une manoeuvre particulière de l'interface utilisateur ou par appui sur une touche particulière de l'interface utilisateur.

Dans une étape 230, déclenchée automatiquement suite à l'étape 220, une alimentation du motoréducteur est commandée provoquant l'enroulement de l'élément enroulable et par conséquent la montée de la barre de charge jusqu'à une position supérieure à la position P2.

Dans une étape 240, déclenchée automatiquement suite à l'étape 230, deux alimentations du motoréducteur de courte durée et dans des sens différents sont commandées, provoquant un léger aller-retour de la barre de charge. Ces mouvements permettent de confirmer très rapidement que l'enregistrement de la valeur dM a été effectué.

Le dispositif peut alors basculer dans le mode d'utilisation, les autres positions P2 et P4 ne devant pas nécessairement être apprises dans le mode de configuration.

Suite à l'enregistrement effectué à l'étape 110 ou à l'étape 220, l'unité de commande détermine d'elle-même quelle doit être l'opération suivante à effectuer. Cette opération peut dépendre de plusieurs critères, notamment :
- si le dernier déplacement de l'élément enroulable était un déplacement de descente, alors l'unité de commande provoque une inversion du sens de déplacement et, si le dernier déplacement de l'élément enroulable était un déplacement de montée, alors l'unité de commande provoque une nouvelle montée,
- si la barre de charge se bloque dans le moyen de verrouillage, dans une fenêtre temporelle succédant à l'enregistrement de la valeur dM correspondant à la position PM, l'unité de commande en déduit qu'il s'agit de la position P2,
- de manoeuvres particulières effectuées pour la configuration selon la première procédure ou selon la deuxième procédure,
- de l'ordre donné par l'installateur suivant l'enregistrement de la valeur dM.

L'enregistrement de la valeur de la position d'inversion par l'installateur permet donc de configurer le dispositif de manière simple, et en particulier, d'amener le dispositif dans la position d'inversion éventuellement par de fins ajustements, à partir d'une position en deçà ou au-delà du verrou.

Une troisième procédure de configuration du dispositif d'écran motorisé est représentée à la figure 5 et définit un troisième mode d'exécution du procédé de fonctionnement selon l'invention, ce mode étant applicable aux moyens de verrouillage de type « fermé » c'est-à-dire des moyens de verrouillage en dessous desquels la barre de charge ne peut pas descendre.

Dans une première étape 300, l'installateur commande par l'intermédiaire de l'interface utilisateur un mouvement de descente de la barre de charge, c'est-à-dire un mouvement de déroulement de l'élément enroulable jusqu'à amener la barre de charge dans les moyens de verrouillage dans la position PM correspondant compte tenu du type de moyens de verrouillage à une position de blocage de la barre de charge.

Dans cette position, l'élément enroulable peut cependant continuer à être déroulé puis enroulé, sur ordre de l'installateur, comme représenté à l'étape 310, pour atteindre une position dans laquelle la barre de charge est dans la position PM et dans laquelle l'élément enroulable est légèrement tendu (particulièrement dans le cas où l'élément enroulable est une toile).

Les étapes 320 à 380 de ce mode d'exécution sont identiques aux étapes 110 à 170 du premier mode d'exécution.

Le dispositif d'écran motorisé peut alors basculer dans le mode d'utilisation.

Le dispositif d'écran motorisé selon l'invention peut présenter en mémoire différents algorithmes correspondant aux différentes procédures de configuration. Le choix de la procédure utilisée peut par exemple revenir à l'installateur. L'existence de ces différentes procédures permet à l'installateur d'utiliser la procédure permettant de réaliser la configuration de la manière la plus efficace possible.

Dans le mode d'utilisation, lorsqu'un ordre de fermeture de l'écran est commandé, l'élément enroulable est déroulé jusqu'à ce que la barre de charge atteigne la position PM, puis l'écran est enroulé pour atteindre la position P2. Si la valeur d2 correspondant à la position P2 est déjà enregistrée, l'enroulement de l'élément enroulable est arrêté dès que la barre de charge atteint cette position et, si la valeur d2 correspondant à la position P2 n'est pas encore enregistrée, l'enroulement de l'élément enroulable est commandé jusqu'à ce que le capteur de couple détecte un couple supérieur à une valeur déterminée signifiant que la position P2 est atteinte. Dans ce dernier cas, la position P2 peut alors être enregistrée en mémoire. La barre de charge reste alors bloquée en position jusqu'à ce qu'un autre ordre de mouvement de l'écran soit commandé.

Lorsqu'un ordre d'enroulement de l'élément enroulable est commandé, l'élément enroulable est d'abord déroulé jusqu'à ce que la barre de charge atteigne la position P4. Si la valeur d4 correspondant à la position P4 est déjà enregistrée, le déroulement de l'élément enroulable est arrêté dès que la barre de charge atteint cette position et, si la valeur d4 correspondant à la position P4 n'est pas encore enregistrée, le déroulement de l'élément enroulable est commandé jusqu'à ce que cette position soit détectée automatiquement, par exemple si le capteur de couple détecte un allègement de charge signifiant que la position P4 est atteinte. Dans ce dernier cas, la valeur d4 correspondant à la position P4 peut alors être enregistrée en mémoire. L'élément enroulable peut ensuite être enroulé librement jusqu'à l'ouverture totale de l'écran ou jusqu'à une position définie.

Si le dispositif d'écran motorisé comprend plusieurs moyens de verrouillage à différents endroits sur les rails de guidage, permettant de définir des positions intermédiaires, il peut être prévu que si l'utilisateur commande un arrêt du mouvement de l'élément enroulable alors que la barre de charge se trouve à proximité de moyens de verrouillage, des manoeuvres d'enroulement et de déroulement soient automatiquement effectués, après cette commande d'arrêt, afin de bloquer la barre de charge dans lesdits moyens de verrouillage.

Dans le mode utilisateur, les enregistrements des valeurs d2, dM, et d4 correspondant aux positions P2, PM et P4 peuvent être régulièrement mises à jour suite, par exemple, après un certain nombre de déplacements de la barre de charge afin de tenir compte de dispersions pouvant intervenir à l'usage, notamment au niveau des jeux de la chaîne cinématique d'entraînement de l'élément enroulable. Dans ce cas, la position P2 est déterminée grâce au capteur de couple, la position PM est déduite de la position P2 (par exemple par une relation mathématique dépendant du type de moyens de verrouillage utilisé ou des valeurs précédemment enregistrées) et la position P4 est déterminée grâce au capteur de couple ou est déduite de la position P2 (par exemple par une relation mathématique dépendant du type de moyens de verrouillage utilisé ou des valeurs précédemment enregistrées).

Les moyens de verrouillage utilisés peuvent également être du type dans lequel la traversée du moyen de verrouillage par la barre de charge dans un premier sens n'entraîne pas de blocage et dans lequel la traversée du moyen de verrouillage par la barre de charge dans un deuxième sens entraîne un blocage. Pour déverrouiller la barre de charge, un léger mouvement de celle-ci dans le premier sens puis un mouvement dans le deuxième sens est nécessaire.

Les moyens de verrouillage de fin de course basse ne sont en général pas de ce type. Par conséquent, les fonctionnements des moyens de verrouillage équipant le dispositif d'écran motorisé peuvent être différents.

Les différents modes d'exécution du procédé décrits peuvent également s'appliquer dans le cas de verrous électromécaniques pilotés en fonction des positions et/ou des mouvements de l'extrémité libre de l'écran.

## Revendications

1. Procédé de fonctionnement d'un dispositif d'écran motorisé (1) comprenant un écran (2) enroulable sur un tube d'enroulement (3) dont la position angulaire est mesurée par un capteur (12), et au moins un moyen de verrouillage (6) de l'extrémité libre (4) de l'écran définissant une position dite verrouillée (P2) dans le sens de l'enroulement, le verrouillage étant activé dans ce sens si l'extrémité libre (4) de l'écran atteint préalablement au moins une position d'inversion (P3), à laquelle correspond pour le déroulement une valeur de position angulaire du tube d'enroulement dite position d'inversion de rotation (D3), située au-delà de la position verrouillée (P2) dans le sens du déroulement de l'écran,
**caractérisé en ce que**, dans un mode de configuration du verrouillage de l'écran (2), l'installateur procède au seul enregistrement de la valeur d'une position angulaire choisie, dite position d'inversion de rotation enregistrée (DM), cette position étant située au niveau ou au-delà de la position d'inversion de rotation (D3), dans le sens de déroulement de l'écran (2).

2. Procédé de fonctionnement selon la revendication 1, **caractérisé en ce que**, dans un mode d'utilisation, lorsque l'écran (2) est entraîné dans le sens du déroulement et lorsque le capteur (12) mesure une valeur égale à la valeur de la position d'inversion de rotation enregistrée (DM), le dispositif d'écran motorisé (1) commande automatiquement l'entraînement de l'écran (2) dans le sens de l'enroulement.

3. Procédé de fonctionnement selon la revendication 1 ou 2, **caractérisé en ce que** la valeur de la position d'inversion de rotation enregistrée (DM) est inférieure à une valeur de position angulaire du tube d'enroulement dite position de sortie (D4), au-delà de laquelle le verrouillage de l'écran (2) n'est plus activé lorsque l'écran est entraîné dans le sens de l'enroulement.

4. Procédé de fonctionnement selon la revendication 3, **caractérisé en ce que** la valeur de la position angulaire choisie (DM) est enregistrée après un déplacement d'enroulement dont l'amplitude est supérieure à l'écart entre la position de sortie (D4) et la position angulaire (D2) du tube d'enroulement correspondant à la position verrouillée (P2) de l'extrémité libre de l'écran.

5. Procédé de fonctionnement selon l'une des revendications 1 à 4, **caractérisé en ce que** l'enregistrement de la valeur de la position d'inversion de rotation enregistrée (DM) est automatiquement suivi d'un entraînement d'enroulement de l'écran.

6. Procédé de fonctionnement selon l'une des revendications 1 à 5, **caractérisé en ce que**, dans le mode de configuration du verrouillage de l'écran (2), un signal de confirmation d'enregistrement est donné, au moins par un bref arrêt de l'entraînement d'enroulement, lorsque l'extrémité libre (4) de l'écran (2) a dépassé la position verrouillée.

7. Procédé de fonctionnement selon l'une des revendications 1 à 6, **caractérisé en ce que** la valeur de position angulaire du tube d'enroulement (D2) correspondant à la position verrouillée (P2) est mesurée par un capteur (10) de couple d'entraînement de l'écran.

8. Procédé de fonctionnement selon la revendication précédente, **caractérisé en ce qu**'une valeur de position angulaire du tube d'enroulement (D5) correspondant à une position de déverrouillage (P5) située au-delà de la position de sortie (P4) dans le sens du déroulement, est déterminée, dans le mode de configuration du verrouillage de l'écran et/ou dans le mode d'utilisation, par addition de la valeur de position angulaire (D2) du tube d'enroulement correspondant à la position verrouillée (P2) à une valeur d'écart préenregistrée (DE).

9. Dispositif d'écran motorisé (1) comprenant un écran (2) enroulable sur un tube d'enroulement (3) dont la position angulaire est mesurée par un capteur (12), et au moins un moyen de verrouillage (6) de l'extrémité libre (4) de l'écran (2) définissant une position dite verrouillée (P2) dans le sens de l'enroulement, le verrouillage n'étant activé dans ce sens que si l'extrémité libre (4) de l'écran (2) atteint préalablement au moins une position d'inversion (P3), à laquelle correspond pour le déroulement une valeur de position angulaire du tube d'enroulement dite position d'inversion de rotation (D3), située au-delà de la position verrouillée (P2) dans le sens du déroulement de l'écran (2), **caractérisé en ce qu'**il comprend des moyens matériels (7, 8, 9, 10, 12) et logiciels pour la mise en oeuvre du procédé de fonctionnement selon l'une des revendications précédentes.

10. Dispositif d'écran motorisé selon la revendication 9, **caractérisé en ce qu**'il comprend un capteur (10) de couple d'entraînement de l'écran.

## Claims

1. A method for operating a motorized screen device (1) comprising a screen (2) windable on a winding tube (3) whose angular position is measured by a sensor (12), and at least one means of latching (6) of the free end (4) of the screen defining a position termed latched (P2) in the direction of winding, the latching being activated in this direction if the free end (4) of the screen previously reaches at least one position of reversal (P3), to which corresponds for the unwinding a value of angular position of the winding tube termed the position of reversal of rotation (D3), situated beyond the latched position (P2) in the direction of unwinding of the screen,
wherein, in a mode of configuration of the latching of the screen (2), the installer proceeds merely to record the value of a chosen angular position, termed the recorded rotation reversal position (DM), this position being situated at the level of or beyond the position of reversal of rotation (D3), in the direction of unwinding of the screen (2).

2. The method of operation as claimed in claim 1, wherein, in a mode of use, when the screen (2) is driven in the direction of unwinding and when the sensor (12) measures a value equal to the value of the recorded rotation reversal position (DM), the motorized screen device (1) automatically drives the screen (2) in the direction of winding.

3. The method of operation as claimed in claim 1 or 2, wherein the value of the recorded rotation reversal position (DM) is less than a value of angular position of the winding tube termed the exit position (D4), beyond which the latching of the screen (2) is no longer activated when the screen is driven in the direction of winding.

4. The method of operation as claimed in claim 3, wherein the value of the chosen angular position (DM) is recorded after a winding displacement whose amplitude is greater than the difference between the exit position (D4) and the angular position (D2) of the winding tube corresponding to the latched position (P2) of the free end of the screen.

5. The method of operation as claimed in one of claims 1 to 4, wherein the recording of the value of the recorded rotation reversal position (DM) is automatically followed by a screen winding drive.

6. The method of operation as claimed in one of claims 1 to 5, wherein, in the mode of configuration of the latching of the screen (2), a signal for confirming recording is given, at least by a brief stoppage of the winding drive, when the free end (4) of the screen (2) has gone past the latched position.

7. The method of operation as claimed in one of claims 1 to 6, wherein the value of angular position of the winding tube (D2) corresponding to the latched position (P2) is measured by a screen drive torque sensor (10).

8. The method of operation as claimed in the preceding claim, wherein a value of angular position of the winding tube (D5) corresponding to a position of unlatching (P5) situated beyond the exit position (P4) in the direction of unwinding, is determined, in the mode of configuration of the latching of the screen and/or in the mode of use, by addition of the value of angular position (D2) of the winding tube corresponding to the latched position (P2) to a prerecorded difference value (DE).

9. A motorized screen device (1) comprising a screen (2) windable on a winding tube (3) whose angular position is measured by a sensor (12), and at least one means of latching (6) of the free end (4) of the screen (2) defining a position termed latched (P2) in the direction of winding, the latching being activated in this direction only if the free end (4) of the screen (2) previously reaches at least one position of reversal (P3), to which corresponds for the unwinding a value of angular position of the winding tube termed the position of reversal of rotation (D3), situated beyond the latched position (P2) in the direction of unwinding of the screen (2), wherein the device comprises hardware (7, 8, 9, 10, 12) and software means for the implementation of the method of operation as claimed in one of the previous claims.

10. The motorized screen device as claimed in claim 9, which device comprises a screen drive torque sensor (10).

## Patentansprüche

1. Verfahren zum Betrieb einer motorisierten Abschirmvorrichtung (1) mit einer Abschirmung (2), die auf einem Aufrollrohr (3) aufrollbar ist, dessen Winkelstellung von einem Messfühler (12) gemessen wird, und mit wenigstens einem das freie Ende (4) der Abschirmung blockierenden Verriegelungsmittel(6), das eine Verriegelungsstellung (P2) genannte Position in Aufrollrichtung definiert, wobei die Verriegelung in dieser Richtung aktiviert wird, wenn das freie Ende (4) der Abschirmung zuvor wenigstens eine Umkehrstellung (P3) erreicht, welcher beim Abrollen ein Wert der Winkelstellung des Aufrollrohrs, genannt Rotationsumkehrstellung (D3), entspricht und welche, in Abrollrichtung der Abschirmung gesehen, jenseits der Verriegelungsstellung (P2) liegt, **dadurch gekennzeichnet, dass** bei einer Ausführungsweise der Verriegelung der Abschirmung (2) der Installateur nur eine einzige Speicherung des Werts einer gewählten Winkelstellung, genannt registrierte Rotationsumkehrstellung (DM), vornimmt, welche in Höhe oder, in Abrollrichtung der Abschirmung (2) gesehen, jenseits der Rotationsumkehrstellung (D3) liegt.

2. Verfahren nach Anspruch 1, **dadurch gekennzeichnet, dass** bei einer Verwendungsart, wenn die Abschirmung (2) in Abrollrichtung angetrieben wird und wenn der Messfühler (12) einen Wert misst, der gleich dem Wert der registrierten Rotationsumkehrstellung (DM) ist, die motorisierte Abschirmvorrichtung (1) automatisch den Antrieb der Abschirmung (2) in Aufrollrichtung steuert.

3. Verfahren nach Anspruch 1 oder 2, **dadurch gekennzeichnet, dass** der Wert der registrierten Rotationsumkehrstellung (DM) kleiner ist als ein Wert der Winkelstellung des Aufrollrohrs, genannt Ausgangsposition (D4), jenseits deren die Verriegelung der Abschirmung (2) nicht mehr aktiviert wird, wenn die Abschirmung in Aufrollrichtung angetrieben wird.

4. Verfahren nach Anspruch 3, **dadurch gekennzeichnet, dass** der Wert der gewählten Winkelstellung (DM) nach einer Aufrollbewegung gespeichert wird, welche grösser ist als der Abstand zwischen der Ausgangsstellung (D4) und der Winkelstellung (D2) des Aufrollrohrs, welche der Verriegelungstellung (P2) des freien Endes der Abschirmung entspricht.

5. Verfahren nach einem der Ansprüche 1 bis 4, **dadurch gekennzeichnet, dass** der Speicherung des Werts der registrierten Rotationsumkehrstellung (DM) automatisch ein Antrieb der Abschirmung in Aufrollrichtung folgt.

6. Verfahren nach einem der Ansprüche 1 bis 5, **dadurch gekennzeichnet, dass** bei einer Ausführungsweise der Verriegelung der Abschirmung (2) ein Signal der Bestätigung der Registrierung gegeben wird, und zwar wenigstens durch eine kurze Unterbrechung der Aufwärtsbewegung, wenn das freie Ende (4) der Abschirmung (2) die Verriegelungstellung passiert hat.

7. Verfahren nach einem der Ansprüche 1 bis 6, **dadurch gekennzeichnet, dass** der der Verriegelungstellung (P2) entsprechende Wert der Winkelstellung (D2) des Aufrollrohrs von einem das Antriebsmoment der Abschirmung messenden Messfühler (10) gemessen wird.

8. Verfahren nach dem vorangehenden Anspruch, **dadurch gekennzeichnet, dass** bei der Ausführungsweise der Verriegelung der Abschirmung und/oder bei der Verwendungsart ein Wert der Winkelstellung (D5) des Aufrollrohrs, welche einer Entriegelungsstellung (P5) entspricht, die, in Abrollrichtung gesehen, jenseits der Ausgangsstellung (P4) liegt, **dadurch** bestimmt wird, dass der Wert der der Verriegelungsstellung (P2) entsprechenden Winkelstellung (D2) des Aufrollrohrs zu einem zuvor gespeicherten Abstandswert (DE) addiert wird.

9. Motorisierte Abschirmvorrichtung (1) mit einer Abschirmung (2), die auf einem Aufrollrohr (3) aufrollbar ist, dessen Winkelstellung von einem Messfühler (12) gemessen wird, und mit wenigstens einem das freie Ende (4) der Abschirmung (2) blockierenden Verriegelungsmittel (6), welches eine Verriegelungsstellung (P2) genannte Position in Aufrollrichtung definiert, wobei die Verriegelung in dieser Richtung nur aktiviert wird, wenn das freie Ende (4) der Abschirmung (2) zuvor wenigstens eine Umkehrstellung (P3) erreicht, der beim Abrollen ein Wert der Winkelstellung des Aufrollrohrs, genannt Rotationsumkehrstellung (D3), entspricht und welche, in Abrollrichtung der Abschirmung (2) gesehen, jenseits der Verriegelungsstellung (P2) liegt, **dadurch gekennzeichnet, dass** sie Hardware-Mittel (7, 8, 9, 10, 12) sowie Software-Mittel zum Ausführen des Verfahrens nach einem der vorangehenden Ansprüche aufweist.

10. Vorrichtung nach Anspruch 9, **dadurch gekennzeichnet, dass** sie einen das Antriebsmoment der Abschirmung messenden Messfühler (10) hat.
